# EUROPÄISCHE PATENTSCHRIFT

(11) **EP 2 278 171 B1**
(45) Veröffentlichungstag und Bekanntmachung des Hinweises auf die Patenterteilung: **14.05.2014**
(21) Anmeldenummer: 10169841.3
(22) Anmeldetag: 16.07.2010
(51) Int. Cl.: F16B 5/02, F24J 2/52, F24J 2/46

(54) **Befestigungselement und -system für Anbauteile**
Fixing element and system for mounting parts
Elément et système de fixation pour pièces rapportées

(30) Priorität: 16.07.2009 DE 102009033416
(43) Veröffentlichungstag der Anmeldung: 26.01.2011
(73) Patentinhaber: EJOT Baubefestigungen GmbH, 57334 Bad Laasphe (DE)
(72) Erfinder: Hackler, Erhard, 57319 Bad Berleburg (DE); Gens, Lothar, 57319 Bad Berleburg (DE)
(74) Vertreter: Bublak, Wolfgang

(56) Entgegenhaltungen:
- EP-A2- 0 811 773
- DE-A1-102004 062 151
- DE-U1-202007 017 663

## Beschreibung

Die vorliegende Erfindung betrifft ein Befestigungselement und ein Befestigungssystem zur Befestigung von Anbauteilen wie beispielsweise Solaranlagen auf entsprechenden Unterbauten wie etwa abgedichteten Dach- bzw. Flachdachkonstruktionen.

Ein Problem, welches sich z. B. bei der Befestigung von Solaranlagen auf Flachdächern stellt, ist, dass eine bereits vorhandene Dachbahn beschädigt wird, um die verwendeten Befestigungsmittel in dem tragfähigen Untergrund der Dachkonstruktion zu verankern. Die beschädigte Stelle muss anschließend wieder abgedichtet werden, um das Eindringen von Feuchtigkeit in den Isolierstoff bzw. die Dachkonstruktion zu verhindern.

So beschreibt die WO 2007/093421 A2 eine Befestigungsvorrichtung für Photovoltaikanlagen, welche einen Montagekörper umfasst, an welchem der zu befestigende Gegenstand befestigbar ist. Des Weiteren ist ein Befestigungselement mit wenigstens einem Vorsprungsabschnitt und einem Basisabschnitt vorgesehen, wobei der Basisabschnitt an einer Tragkonstruktion der Gebäudeaußenfläche befestigbar ist und der Vorsprungsabschnitt mit dem Montagekörper verbindbar ist. Der Vorsprungsabschnitt durchdringt auf der der Tragkonstruktion abgewandten Seite bis zu einer Ebene einer auf der Tragkonstruktion befindlichen Abdichtung eine Wärmedämmschicht. Dabei wird die Abdichtung zwischen Montagekörper und Vorsprungsabschnitt eingespannt. Der Ablauf bei der nachträglichen Montage auf einem Flachdach ist folgendermaßen: Zunächst wird aus der Abdichtung und der Wärmedämmung Material in etwa der Größe des Vorsprungsabschnitts herausgeschnitten oder anderweitig entfernt. Ferner werden Abdichtung und Wärmedämmung geschlitzt und zwar so, dass die Schlitze in etwa den Diagonalen der rechteckigen Grundfläche des Basisabschnitts entsprechen. Diese Schlitze reichen aus, um die vier durch die Schlitze entstandenen trapezförmigen Abschnitte der Abdichtung und Wärmedämmung derart hochklappen zu können, dass das Befestigungselement mit dem Basisabschnitt voran unter die Abdichtung und Wärmedämmung eingebracht und am Trapezblech befestigt werden kann. Anschließend müssen die in die Abdichtung eingebrachten Schlitze, z. B. mit Hilfe von Abdichtbahnen oder einer auch die Schlitze übergreifenden Abdichtungsmanschette wieder dicht verschlossen bzw. verschweißt werden. Insbesondere das Aufschneiden und Wiederverschweißen der Dachbahn erfordert dabei einen hohen zeitlichen und personellen Aufwand.

Aus der EP 0 779 400 B1 ist weiterhin eine Schraube zum Befestigen von Dämmplatten an einer Unterkonstruktion, insbesondere einer Hauswand oder einer Dachkonstruktion, bekannt, welche einen Schraubenkopf, einen an diesen anschließenden gewindefreien Schaftabschnitt und einen innerhalb des gewindefreien Schaftabschnitts angeordneten, als Bund ausgebildeten Anschlag zur Abstützung eines eine Dämmplatte abdeckenden Blechteils, aufweist. An den unteren (d. h. unterhalb von dem Bund befindlichen) Teil des zweigeteilten gewindefreien Schaftabschnitts schließt sich ein Gewindeabschnitt an. Der untere gewindefreie Abschnitt dient zum Überbrücken der Dämmplatte. Diese Konstruktion ermöglicht allerdings keine Verankerung der Schraube in dem Dämmplattenmaterial. Zudem kann, dadurch, dass der Abstand zwischen dem Bund und dem Schraubenkopf nicht variabel ausgestaltbar ist, keine wirksame Abdichtung gegen Feuchtigkeit von Außen erzielt werden.

Es ist daher die Aufgabe der vorliegenden Erfindung, ein Befestigungselement bzw. -system zu schaffen, mit denen eine Befestigung von Anbauteilen für entsprechende Unterbauten sicher und ohne großen Aufwand erfolgen kann und zwar ohne eine auf den Unterbauten ggf. vorhandene Materialbahn nennenswert zu verletzen, und mit denen praktisch zeitgleich mit der Montage die entstandene Eindringstelle in der Materialbahn sicher und effizient abgedichtet werden kann.

Einen weiteren Stand der Technik bildet das Dokument DE 10 2004 062 151 A.

Die erfindungsgemäße Aufgabe wird gelöst durch ein Befestigungselement zum Eindrehen in einen Baustoff mit einem Stellkörper mit einer Längsachse X, wobei an dem in Eindrehrichtung vom Baustoff abgewandten Ende des Stellkörpers ein oberer Befestigungsabschnitt angeordnet ist und wobei an dem in Eindrehrichtung zum Baustoff hingewandten Ende des Stellkörpers ein u n t erer Befestigungsabschnitt angeordnet ist, wobei der untere Befestigungsabschnitt zumindest einen in Eindrehrichtung vom Baustoff abgewandten ersten Gewindeabschnitt und einen daran anschließenden, in Eindrehrichtung zum Baustoff hingewandten, zweiten Gewindeabschnitt aufweist, wobei der zweite Gewindeabschnitt eine Steigung S aufweist und wobei der erste Gewindeabschnitt im Wesentlichen in einer Ebene E senkrecht zu der Längsachse X des Stellkörpers verläuft und wobei der Gewindedurchmesser in Richtung von dem zweiten Gewindeabschnitt zu dem ersten Gewindeabschnitt von einem Wert D1 auf einen Wert D2 zunimmt, derart dass der erste Gewindeabschnitt eine tellerartige Auflage bildet. Die Aufgabe wird des Weiteren gelöst durch ein Befestigungssystem welches zusätzlich einen Druckteller aufweist, welcher auf den oberen Befestigungsabschnitt des Stellkörpers aufbringbar ist, so dass eine zwischen der tellerartigen Auflage des ersten Gewindeabschnitts und dem Druckteller liegende Materialbahn einklemmbar ist.

Der Begriff Baustoff umfasst vorliegend alle Sorten von organischen (z. B. Holz, Zellulose etc.) und anorganischen Baustoffen (z. B. Polystyrol, Polyurethan etc.). Der Begriff Materialbahn umfasst vorliegend alle Sorten von Dachbahnen, Kunststoffbahnen und anderweitigen elastischen Abdichtungsbahnen.

In einer bevorzugten Ausführungsform der Erfindung weist der Stellkörper eine Bohrung entlang der Längsachse X auf. Die Bohrung ist vorzugsweise als Gewindebohrung ausgebildet und dient zur verstellbaren Aufbringung des Befestigungselements auf z. B. eine korrespondierende Stockschraube. Die Bohrung kann allerdings auch einzelne Rastelemente aufweisen, welche mit korrespondierenden Rastelementen auf einer Zahnstange zusammenwirken. Die Bohrung kann zudem Abstufungen zur Querschnittsverengung aufweisen.

In einer anderen bevorzugten Ausführungsform der Erfindung schließt sich an den oberen Befestigungsabschnitt ein Anschlussstück zum Eingriff durch ein Werkzeug an. Vorzugsweise ist das Anschlussstück als Außensechskant ausgebildet. Es sind allerdings auch andere Formen wie etwa ein Außentorx oder Außenvierkant denkbar. Sollte im Anschluss an den Montagevorgang eine Feinabstimmung - etwa der Position der tellerartigen Auflage - notwendig sein, so kann diese über das entsprechende Anschlussstück erfolgen, ohne dass dabei andere Komponenten maßgeblich verstellt werden bzw. verstellt werden müssen.

In einer wiederum anderen bevorzugten Ausführungsform der Erfindung weist der obere Befestigungsabschnitt ein metrisches Schraubgewinde auf. Auf diese Weise kann auf den oberen Befestigungsabschnitt beispielsweise ein Druckteller aufgebracht werden, welcher zum Einklemmen bzw. Einspannen einer Materialbahn zwischen der tellerartigen Auflage und dem Druckteller, dient. Das metrische Schraubgewinde weist üblicher Weise eine geringe Steigung auf, denn der Druckteller soll während der Montage leicht aufgeschraubt werden können und dabei möglichst fein justierbar sein. Die Verbindung des Drucktellers mit dem jeweils korrespondierenden oberen Befestigungsabschnitt des Stellkörpers kann allerdings auch durch Stecken, Rasten, Schnappen, Klemmen, Festpressen oder Magnetkraft hergestellt werden. Durch das Zusammenspiel der tellerartigen Auflage mit dem Druckteller wird auch eine Abdichtwirkung erzielt.
In noch einer weiteren bevorzugten Ausführungsform der Erfindung liegt die Steigung S des zweiten Gewindeabschnitts zwischen 5 und 50 mm, bevorzugter zwischen 10 und 40 mm und noch bevorzugter zwischen 15 und 30 mm. Die Steigung des unmittelbar an den zweiten Gewindeabschnitt anschließenden ersten Gewindeabschnitts beträgt im Wesentlichen Null und verläuft daher planar bzw. im Wesentlichen in einer Ebene E senkerecht zur Längsachse X des Stellkörpers. Die größere Gewindesteigung des zweiten Gewindeabschnitts erleichtert vor allem den Durchtritt des Stellkörpers durch die Materialbahn sowie das Eindrehen in den Baustoff ohne nennenswerte Verletzung derselben. Die Gewindesteigung wird vorliegend definiert als der Weg in Millimeter, den das Befestigungselement bei einer Umdrehung um seine Längsachse X zurücklegt. Die Gewindesteigung hängt aber letztlich von der Art des verwendeten Baustoffs und der verwendeten Materialbahn ab, so dass jeweils auch größere und kleinere Werte denkbar sind.

In einer anderen bevorzugten Ausführungsform der Erfindung nimmt der Gewindedurchmesser von einem Wert D1 zwischen 5 und 20 mm am Beginn des zweiten Gewindeabschnitts auf einen Wert D2 zwischen 20 und 50 mm am ersten Gewindeabschnitt zu. Auch diese Werte variieren in Abhängigkeit von dem jeweiligen Materialbahn- bzw. Baustoffmaterial. In der Regel verläuft die Zunahme des Gewindedurchmessers vom Wert D1 auf den Wert D2 im ersten Gewindeabschnitt stetig bzw. kontinuierlich wobei im ersten Gewindeabschnitt der Gewindedurchmesser im Wesentlichen konstant bei dem Wert D2 bleibt, so dass der untere Befestigungsabschnitt insgesamt eine kreiselförmige Spirale bildet, welche in einer tellerartigen Auflage endet. Die tellerartige Auflage des ersten Gewindeabschnitts verläuft in etwa über eine ¾ Umdrehung von einer Anfangskante des ersten Gewindeabschnitts bis zu einer scharfen Endkante des ersten Gewindeabschnitts planar bzw. in der Ebene E mit dem Durchmesser D2. Dadurch, dass sich die tellerartige Auflage des ersten Gewindeabschnitts über etwa eine ¾ Umdrehung von einer Anfangskante bis zu einer scharfen Endkante erstreckt, wird ein Spalt G von etwa ¼ Umdrehung zwischen diesen beiden Kanten gebildet. Diese Ausgestaltung des unteren Befestigungsabschnitts bewirkt, dass der Stellkörper besonders leicht und praktisch ohne Beschädigung der Materialbahn und des Baustoffs montiert werden kann. Zudem sorgt die spiralförmige Ausgestaltung für einen besonders guten Halt bzw. eine besonders gute Verankerung des Stellkörpers im Bau- bzw. Isolierstoff einer Dachkonstruktion. Weitere Gewindeabschnitte mit konstantem Durchmesser und/oder konstanter Steigung sind denkbar.

In einer bevorzugten Ausführungsform des erfindungsgemäßen Befestigungssystems weist der Druckteller eine axiale Bohrung, insbesondere eine Gewindebohrung, auf. Auf diese Weise kann der Druckteller auf ein korrespondierendes Gewinde des oberen Befestigungsabschnitts des Befestigungselements aufgeschraubt werden und eine Materialbahn zwischen der tellerartigen Auflage und dem Druckteller eingeklemmt bzw. eingespannt werden. Die Verbindung des Drucktellers mit dem oberen Befestigungsabschnitt des Stellkörpers kann allerdings auch durch Schnappen, Klemmen, Festpressen oder Magnetkraft hergestellt werden. Durch das Zusammenspiel der tellerartigen Auflage mit dem Druckteller wird zudem eine Abdichtwirkung erzielt.

In einer weiteren bevorzugten Ausführungsform des erfindungsgemäßen Befestigungssystems weist der Druckteller ein Anschlussstück, insbesondere einen Außensechskant, zum Eingriff durch ein Werkzeug auf. Es sind aber auch hier andere Formen wie etwa ein Außentorx oder ein Außenvierkant denkbar.

In einer wiederum anderen bevorzugten Ausführungsform des erfindungsgemäßen Befestigungssystems weist der Druckteller an seiner Unterseite eine Aussparung auf. Die Aussparung kann im Hinblick auf eine besonders starke Abdichtung bzw. Haltbarmachung einer ggf. beim Setzen des Befestigungselements leicht eingeschnittenen Dachbahn Dichtmasse aufnehmen. Das Aufbringen von Dichtmasse ist aber in der Regel nur bei aufgerauten Oberflächen notwendig. Bei glatten Oberflächen wird bereits durch das Einklemmen der Materialbahn zwischen Druckteller und tellerartiger Auflage eine optimale Abdichtung erreicht, wobei ggf. etwas Kleber auf die Unterseite des Drucktellers aufgebracht wird.

In einer weiteren bevorzugten Ausführungsform umfasst das erfindungsgemäße Befestigungssystem ein stangenartiges Element, auf welchem das Befestigungselement und/oder der Druckteller verstellbar angeordnet sind. Das stangenartige Element ist vorzugsweise als Stockschraube, Gewindestange, Zahnstange oder magnetische Stange ausgebildet und ermöglicht in jedem Fall ein definiertes Verstellen bzw. Verschieben des Befestigungselements und/oder des Drucktellers zur Höheneinstellung in der konkreten Anwendung. Das stangenartige Element kann aber auch in Form eines Nagels, eines Dübels oder eines sonstigen geeigneten Baubefestigers vorliegen (jeweils korrespondierend mit der Innenseite bzw. Bohrung des Stellkörpers).

Anhand der folgenden Zeichnungen werden das erfindungsgemäße Befestigungselement, das erfindungsgemäße Befestigungssystem sowie die Montage des erfindungsgemäßen Befestigungssystems beispielhaft erläutert. Es zeigen:
- Fig. 1: eine Einzelansicht eines Stellkörpers gemäß einer Ausführungsform des erfindungsgemäßen Befestigungselements im Querschnitt;
- Fig. 2a: eine perspektivische Einzelansicht des erfindungsgemäßen Stellkörpers gemäß der Ausführungsform nach Fig. 1;
- Fig. 2b: eine Draufsicht auf den erfindungsgemäßen Stellkörper gemäß der Ausführungsform nach den Fig. 1 und 2a;
- Fig. 3: eine Einzelansicht einer Ausführungsform eines erfindungsgemäßen Drucktellers im Querschnitt;
- Fig. 4: eine perspektivische Einzelansicht des Drucktellers gemäß der Ausführungsform nach Fig. 3;
- Fig. 5: eine Querschnittsansicht gemäß einer Ausführungsform des erfindungsgemäßen Befestigungssystems, wobei der Druckteller auf den Stellkörper aufgeschraubt ist;
- Fig. 6: eine Seitenansicht des erfindungsgemäßen Befestigungssystems gemäß der Ausführungsform nach Fig. 5;
- Fig. 7: eine Einzelansicht des stangenartigen Elements gemäß einer weiteren Ausführungsform des erfindungsgemäßen Befestigungssystems;
- Fig. 8: eine teilweise Querschnittsansicht gemäß einer Ausführungsform des erfindungsgemäßen Befestigungssystems im Endmontagezustand mit aufgebrachtem Anbauteil;
- Fig. 9: eine Detailansicht des erfindungsgemäßen Befestigungssystems gemäß der Ausführungsform nach Fig. 8.

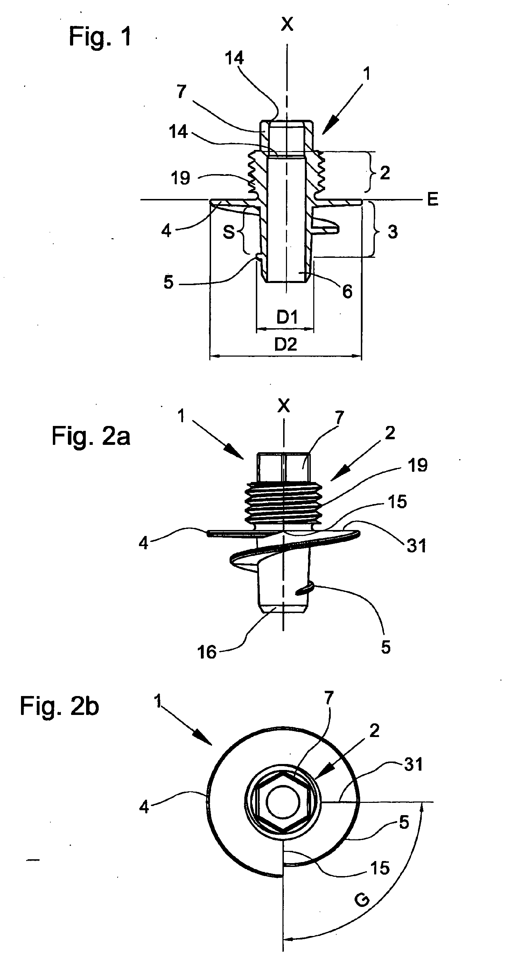

Ein Stellkörper 1 eines erfindungsgemäßen Befestigungselements zum Eindrehen in einen Baustoff wird in den Figuren 1 und 2a bzw. 2b einzeln dargestellt. Der Stellkörper 1 mit der Längsachse X umfasst an dem in Eindrehrichtung vom Baustoff (nicht gezeigt) abgewandten Ende einen oberen Befestigungsabschnitt 2 und an dem in Eindrehrichtung zum Baustoff hingewandten Ende des Stellkörpers 1 ein unteren Befestigungsabschnitt 3, wobei der untere Befestigungsabschnitt 3 zumindest einen in Eindrehrichtung vom Baustoff abgewandten ersten Gewindeabschnitt 4 und einen daran anschließenden, in Eindrehrichtung zum Baustoff hingewandten, zweiten Gewindeabschnitt 5 aufweist. Der zweite Gewindeabschnitt 5 weist eine Steigung S auf und der erste Gewindeabschnitt 4 verläuft im Wesentlichen in einer Ebene E senkrecht zu der Längsachse X des Stellkörpers 1. Der Gewindedurchmesser nimmt in Richtung von dem zweiten Gewindeabschnitt 5 zu dem ersten Gewindeabschnitt 4 von einem Wert D1 auf einen Wert D2 zu und zwar derart dass der erste Gewindeabschnitt 4 eine tellerartige Auflage bildet. Die tellerartige Auflage dient als Unterstützung für eine Materialbahn bzw. Dachbahn. Die Steigung S des zweiten Gewindeabschnitts 5 liegt bei der Anwendung in Isolierstoffplatten regelmäßig zwischen 5 und 50 mm, bevorzugter zwischen 10 und 40 mm und noch bevorzugter zwischen 15 und 30 mm. Die Steigung des unmittelbar an den zweiten Gewindeabschnitt 5 anschließenden ersten Gewindeabschnitts 4 beträgt im Wesentlichen Null und verläuft daher planar bzw. im Wesentlichen in einer Ebene E senkerecht zu der Längsachse X des Stellkörpers 1. Der Gewindedurchmesser nimmt bei der Anwendung in Isolierstoffplatten regelmäßig von einem Wert D1 zwischen 5 und 20 mm am Beginn des zweiten Gewindeabschnitts 5 auf einen Wert D2 zwischen 20 und 50 mm am ersten Gewindeabschnitt 4 zu. Die Zunahme des Gewindedurchmessers vom Wert D1 auf den Wert D2 im ersten Gewindeabschnitt 4 verläuft stetig bzw. kontinuierlich, wobei im ersten Gewindeabschnitt 4 der Gewindedurchmesser im Wesentlichen konstant bei dem Wert D2 bleibt, so dass der untere Befestigungsabschnitt 3 insgesamt eine kreiselförmige Spirale bildet. Die tellerartige Auflage des ersten Gewindeabschnitts 4 verläuft in etwa über eine ¾ Umdrehung des Befestigungselements planar bzw. in der Ebene E und zwar mit dem Durchmesser D2. Wie in Fig. 2a zu sehen, beginnt der erste Gewindeabschnitt 4 mit einer Anfangskante 31 und endet in einer scharfen Endkante 15. Das untere Ende 16 des Stellkörpers 1 verläuft konisch und bildet ebenfalls eine scharfe Kante aus. Diese kann zwei oder mehrere Unterbrechungen aufweisen, um eine profilierte Kante auszubilden, welche das Einschneiden in eine Kunststoffbahn bzw. eine Isolierstoffplatte erleichtert. Der Stellkörper 1 umfasst weiterhin an seinem oberen Ende einen Außensechskantantrieb 7, an den sich unterhalb der obere Befestigungsabschnitt 2 anschließt, welcher regelmäßig als metrisches Gewinde 19 mit relativ geringer Steigung ausgebildet ist. An den oberen Befestigungsabschnitt 2 schließt sich unterhalb die tellerartige Auflage des unteren Befestigungsabschnitts 3 des Stellkörpers 1 an. Die Bohrung 6 des Stellkörpers 1 ist regelmäßig so ausgebildet, dass nach dem Aufschrauben auf etwa eine Stockschraube 12 eine Abdichtung zwischen dem Stellkörper 1 und der Stockschraube 12 erfolgt und somit auf diesem Weg keine Feuchtigkeit in ein Bauteil (z. B. eine Isolierstoffplatte) eindringen kann. Hierfür sorgen regelmäßig eine oder mehrere Abstufungen 14, welche jeweils eine leichte Querschnittsverengung der Bohrung 6 des Stellkörpers 1 bewirken. Die Abstufungen 14 sind üblicher Weise im oberen Bereich des Stellkörpers 1 angeordnet. Denkbar ist auch eine Bereitstellung einer geeigneten Beschichtung in der Bohrung 6 des Stellkörpers 1. In Frage kommt hierbei etwa eine Beschichtung aus einem aushärtbaren Klebstoff, welcher erst nach dem Aufschrauben aushärtet, wie etwa ein mittels eines Polymerfilms mikroverkapselter Klebstoff welcher ggf. in ein reaktives Bindersystem eingebettet ist. Denkbar sind auch Teflonbeschichtungen oder aber geeignete Dichtungseinlagen. Auf diese Weise kann ein besonders fester Halt bei einer Vormontage des Stellkörpers 1 auf der Stockschraube sichergestellt werden. Der Stellkörper 1 wird üblicher Weise aus einem Kunststoffmaterial gebildet. Er kann allerdings auch, für den Einsatz in härteren Baustoffen, aus Metall bzw. Edelstahl gebildet werden. Fig. 2b stellt eine Draufsicht auf den Stellkörper 1 bereit. Man erkennt den Außensechskantantrieb 7 sowie den oberen Befestigungsabschnitt 2 in Form eines Gewindes. Des Weiteren ist zu sehen, dass sich die tellerartige Auflage des ersten Gewindeabschnitts 4 über etwa eine ¾ Umdrehung von der Anfangskante 31 bis zu der scharfen Endkante 15 erstreckt und somit ein Spalt G von etwa ¼ Umdrehung zwischen diesen Kanten 15, 31 gebildet wird. Von unten nährt sich der zweite Gewindeabschnitt 5 mit der Steigung S der Anfangskante 31 an, wobei sein Durchmesser senkrecht unterhalb der scharfen Endkante 15 noch etwas kleiner ist als der Durchmesser D2 der tellerartigen Auflage. Der Spalt G ermöglicht ein besonders leichtes Hindurchtreten des Stellkörpers 1 durch eine Material- bzw. Dachbahn ohne Beschädigungen zu verursachen. Die Größe des Spalts G, und damit auch die Größe der tellerartigen Auflage, kann jedoch in Abhängigkeit von der jeweiligen Anwendung variieren.

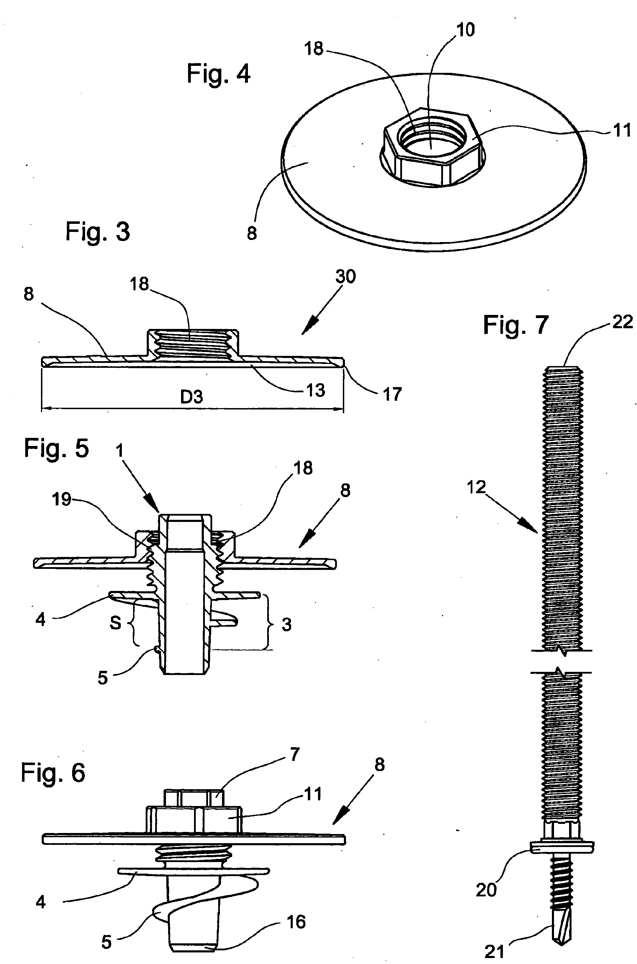

In den Figuren 3 und 4 wird ein erfindungsgemäßer Druckteller 8 veranschaulicht. Dieser umfasst regelmäßig einen Außensechskantantrieb 11 sowie ein Innengewinde 18 oder aber eine Steck-, Schnapp-, Press- oder Rastvorrichtung welche entsprechend mit dem stangenartigen Element 12 korrespondiert. An seiner Unterseite weist der Druckteller 8 einen umfänglichen Vorsprung 17 auf sowie eine damit korrespondierende Aussparung 13, welche regelmäßig zur Aufnahme von Kleber- und/oder Dichtmasse 30 vorgesehen ist. Die Kleber- bzw. Dichtmasse 30 ist dabei hinsichtlich ihrer Menge und hinsichtlich ihrer Zusammensetzung auf das Gesamtsystem abgestimmt. Die Kleber- bzw. Dichtmasse 30 wird in der Regel noch vor dem Verschrauben auf eine zuvor gesäuberte Materialbahn aufgetragen. Der Druckteller 8 kann auch Öffnungen zum Austritt von überschüssiger Kleber- bzw. Dichtmasse aufweisen. Der Druckteller 8 weist regelmäßig einen größeren Durchmesser auf als die tellerartige Auflage des ersten Gewindeabschnitts 4. Hierdurch kann eine optimale Abdichtung der Materialbahn erreicht werden. Vorzugsweise ist der Durchmesser D3 des Drucktellers 8 etwa zweimal so groß wir der Durchmesser D2 der tellerartigen Auflage. Die Abstimmung der beiden Durchmesser erfolgt letztlich in Abhängigkeit von dem verwendeten Baustoff und der verwendeten Materialbahn. Der umfängliche Vorsprung 17 weist in der Regel eine flächige bzw. planare Unterkante auf, um einen guten Halt auf der Materialbahn sicherzustellen und um die Materialbahn nicht zu verletzen. Allerdings sind, je nach Material und Dicke, auch Ausführungsformen mit einer scharfen Unterkante denkbar, wenn z. B. eine Verankerung in der Materialbahn erwünscht ist. Der Druckteller 8 wird üblicher Weise aus einem Kunststoffmaterial gebildet. Er kann allerdings auch aus Metall bzw. Edelstahl gebildet werden.

Die Figuren 5 und 6 veranschaulichen den Stellkörper 1 und den Druckteller 8 im miteinander verschraubten Zustand. Der Druckteller 8 steht über sein Innengewinde 18 in Eingriff mit dem korrespondierenden Außengewinde 19 des oberen Befestigungsabschnitts 2, wobei der Außensechskant 11 des Drucktellers 8 den Außensechskant 7 des Stellkörpers 1 so umschließt, dass auch dieser von einem Werkzeug bedienbar ist. Man erkennt wiederum unterhalb des oberen Befestigungsabschnitts 2 die tellerartige Auflage des ersten Gewindeabschnitts 4 sowie das kontinuierlich im Durchmesser zunehmende Gewinde des zweiten Gewindeabschnitts 5.

Die Fig. 7 veranschaulicht schließlich ein erfindungsgemäßes stangenartiges Element 12 in Form einer Stockschraube mit einem Gewindeschaft und einem am unteren Ende angeordneten Dichtelement 20 in Form einer Scheibe oder einer Mutter sowie einer daran anschließenden Bohrschraube 21. Die Stockschraube 12 weist vorliegend am Kopfende 22 einen Antrieb etwa in Form eines Innensechskants oder eines Innentorx (nicht gezeigt) auf.

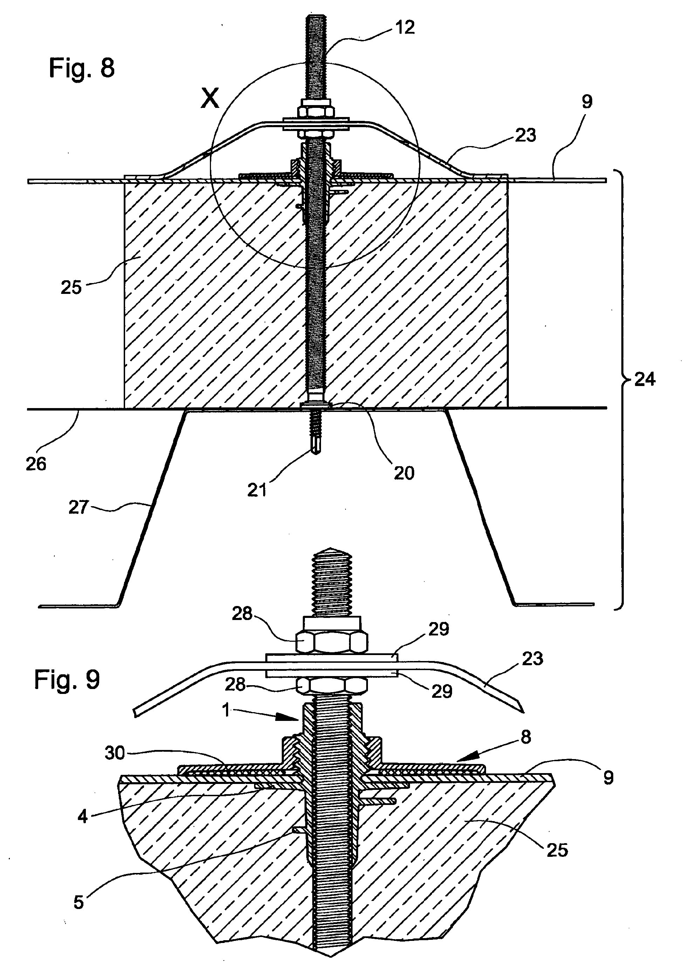

In der Fig. 8 wird beispielhaft ein erfindungsgemäßes Befestigungssystem, welches ein Anbauteil 23 in Form eines Tragrahmens für eine Solaranlage trägt, im fertig montierten Zustand auf einer Dachkonstruktion 24 gezeigt. Die Dachkonstruktion 24 besteht im Wesentlichen aus einer Material- bzw. Dachbahn 9, einer darunter angeordneten Isolierstoffplatte 25, einer unterhalb der Isolierstoffplatte 25 angeordneten Dichtfolie 26 sowie einer Unterkonstruktion 27 (in diesem Ausführungsbeispiel einem Trapezblech) welche mit der Oberseite an der Dichtfolie 26 anliegt. Man erkennt auch, dass die Bohrschraube 21 das Trapezblech 27 durchbohrt hat und dass die Dichtfolie 26 zwischen dem scheibenförmigen Dichtelement 20 der Stockschraube 12 und der Oberseite des Trapezblechs 27 eingespannt ist.

Eine genauere Darstellung des erfindungsgemäßen Befestigungssystems im fertig montierten Zustand wird in Fig. 9 wiedergegeben. Man erkennt, dass das Anbauteil 23 oberhalb des Stellkörpers 1 mittels zweier Muttern 28 an der Stockschraube 12 verkontert ist, wobei sich zwischen den Muttern 28 und dem Anbauteil 23 jeweils eine Unterlegscheibe 29 befindet. Zwischen dem auf den oberen Befestigungsabschnitt 2 des Stellkörpers 1 aufgebrachten Druckteller 8 und der tellerartigen Auflage ist die Dachbahn 9 eingespannt, wobei zwischen Dachbahn 9 und dem Druckteller 8 mit der Aussparung 13 eine Dichtmasse 30 aufgebracht wurde. Die tellerartige Auflage befindet sich gerade unterhalb der Dachbahn 9, so dass der untere Befestigungsabschnitt 3 fest im Isolierstoff 25 verankert ist. Die Stockschraube 12 erstreckt sich weiter nach unten durch die Isolierstoffplatte 25.

Bei der Montage des erfindungsgemäßen Befestigungssystems wird üblicher Weise zunächst ein Startloch, vorzugsweise in der Größe der Scheibe bzw. Mutter des Dichtelements 20, erstellt. Anschließend wird die regelmäßig mit dem Stellkörper 1 positionsgenau vormontierte Stockschraube 12 durch das Startloch in die Dachbahn 9 und in die Isolierstoffplatte 25 bis zum Trapezblech 27 eingesteckt. Mittels eines geeigneten Antriebswerkzeugs kann dann das Trapezblech 27 (sowie ggf. die darauf angeordnete Dichtfolie 26) von der Bohrschraube 21 des Dichtelements 20 durchbohrt werden. Die Scheibe oder Mutter des Dichtelements 20 wird dabei gegen das Trapezblech 27 und ggf. die Dichtfolie 26 gedrückt, um auch an der Unterseite der Dachkonstruktion 24 eine sichere und effiziente Abdichtung zu erzielen. Gleichzeitig dringt der Stellkörper 1 mit seinem unteren konischen Ende 16 in die Dachbahn 9 ein, wobei sich aufgrund der Drehbewegung die kreiselförmige Spirale des unteren Befestigungsabschnitts 3 durch die Dachbahn 9 hindurch windet, bis die tellerartige Auflage unter der Dachbahn 9 zum Liegen kommt. Aufgrund der Elastizität der Dachbahn 9 bleibt hierbei die Größe des Startlochs annährend erhalten. Nun kann eine Kleber- bzw. Dichtmasse 30 in der Umgebung des Startlochs aufgetragen werden. Zum Einspannen der Dachbahn 9 wird anschließend der Druckteller 8 auf den oberen Befestigungsabschnitt 2 des Stellkörpers 1 aufgebracht und mit seinem Außensechskant 11 fest verschraubt und die Dachbahn 9 so fixiert und abgedichtet. Hierbei wird die Kleber- bzw. Dichtmasse 30 automatisch zwischen dem Druckteller 8 und der tellerartigen Auflage verteilt. Die Stockschraube 12 kann grundsätzlich auch ohne vormontierten Stellkörper 1 verwendet werden, wenn die verwendeten Isolierstoffe nicht in einem festgelegten Raster hergestellt sind. Im Übrigen sollte aber der Stellkörper 1 beim Vormontieren so fest auf der Stockschraube 12 sitzen, dass die Drehbewegung der Stockschraube 12 auf den Stellkörper 1 übertragen wird. Falls eine Feinabstimmung in axialer Richtung erforderlich sein sollte, kann diese über den am Stellkörper 1 angespritzten Außensechskantantrieb 7 erfolgen. Die Fachleute werden insbesondere zu würdigen wissen, dass die Montage des erfindungsgemäßen Befestigungselements bzw. des erfindungsgemäßen Befestigungssystems in nur einer Richtung - nämlich der Einbaurichtung - erfolgt, so dass etwa ein Verkontern des Drucktellers in Gegenrichtung (mit entsprechend erhöhtem Montageaufwand) nicht notwendig ist. Darüber hinaus wird durch den zweiten Gewindegang mit der Steigung Null (d. h. die tellerartige Auflage) verhindert, dass sich das erfindungsgemäße Befestigungselement selbst aus dem Baustoff bzw. der Isolierstoffplatte herausdrehen kann.

## Patentansprüche

1. Befestigungselement zum Eindrehen in einen Baustoff mit einem Stellkörper (1) mit einer Längsachse X, wobei an dem in Eindrehrichtung vom Baustoff abgewandten Ende des Stellkörpers (1) ein oberer Befestigungsabschnitt (2) angeordnet ist und wobei an dem in Eindrehrichtung zum Baustoff hingewandten Ende des Stellkörpers (1) ein unterer Befestigungsabschnitt (3) angeordnet ist,
**dadurch gekennzeichnet, dass**
der untere Befestigungsabschnitt (3) zumindest einen in Eindrehrichtung vom Baustoff abgewandten ersten Gewindeabschnitt (4) und einen daran anschließenden, in Eindrehrichtung zum Baustoff hingewandten, zweiten Gewindeabschnitt (5) aufweist, wobei der zweite Gewindeabschnitt (5) eine Steigung S aufweist und wobei der erste Gewindeabschnitt (4) im Wesentlichen in einer Ebene E senkrecht zu der Längsachse X des Stellkörpers (1) verläuft und wobei der Gewindedurchmesser in Richtung von dem zweiten Gewindeabschnitt (5) zu dem ersten Gewindeabschnitt (4) von einem ersten Wert (D1) auf einen zweiten Wert (D2) zunimmt, derart dass der erste Gewindeabschnitt (4) eine tellerartige Auflage bildet.

2. Befestigungselement nach Anspruch 1, **dadurch gekennzeichnet, dass** der Stellkörper (1) eine Bohrung (6) entlang der Längsachse X aufweist.

3. Befestigungselement nach Anspruch 2, **dadurch gekennzeichnet, dass** die Bohrung (6) eine Gewindebohrung ist.

4. Befestigungselement nach einem der vorhergehenden Ansprüche, **dadurch gekennzeichnet, dass** sich an den oberen Befestigungsabschnitt (2) ein Anschlussstück (7) zum Eingriff durch ein Werkzeug anschließt.

5. Befestigungselement nach Anspruch 4, **dadurch gekennzeichnet, dass** das Anschlussstück (7) als Außensechskant ausgebildet ist.

6. Befestigungselement nach einem der vorhergehenden Ansprüche, **dadurch gekennzeichnet, dass** der obere Befestigungsabschnitt (2) ein metrisches Schraubgewinde aufweist.

7. Befestigungselement nach einem der vorhergehenden Ansprüche, **dadurch gekennzeichnet, dass** der obere Befestigungsabschnitt (2) eine Steck-, Rast-, Schnapp- oder Klemmvorrichtung aufweist.

8. Befestigungselement nach einem der vorhergehenden Ansprüche, **dadurch gekennzeichnet, dass** die Steigung S des zweiten Gewindeabschnitts (5) zwischen 5 und 50 mm liegt.

9. Befestigungselement nach einem der vorhergehenden Ansprüche, **dadurch gekennzeichnet, dass** der Gewindedurchmesser von einem ersten Wert (D1) zwischen 5 und 20 mm am Beginn des zweiten Gewindeabschnitts (5) auf einen zweiten Wert (D2) zwischen 20 und 50 mm am ersten Gewindeabschnitt (4) zunimmt.

10. Befestigungselement nach einem der vorhergehenden Ansprüche, **dadurch gekennzeichnet, dass** sich die tellerartige Auflage des ersten Gewindeabschnitts (4) über etwa eine ¾ Umdrehung von einer Anfangskante (31) bis zu einer Endkante (15) erstreckt, so dass ein Spalt G von etwa ¼ Umdrehung zwischen diesen beiden Kanten gebildet wird.

11. Befestigungssystem bestehend aus einem Befestigungselement nach Anspruch 1 und einem Druckteller (8), welcher auf den oberen Befestigungsabschnitt (2) des Stellkörpers (1) aufbringbar ist, so dass eine zwischen der tellerartigen Auflage des ersten Gewindeabschnitts (4) und dem Druckteller (8) liegende Materialbahn (9) einklemmbar ist.

12. Befestigungssystem nach Anspruch 11, **dadurch gekennzeichnet, dass** der Druckteller (8) eine axiale Bohrung (10), insbesondere eine Gewindebohrung, aufweist.

13. Befestigungssystem nach Anspruch 11 oder Anspruch 12, **dadurch gekennzeichnet, dass** der Druckteller (8) ein Anschlussstück (11), insbesondere einen Außensechskant, zum Eingriff durch ein Werkzeug aufweist.

14. Befestigungssystem nach einem der Ansprüche 11 bis 13, **dadurch gekennzeichnet, dass** der Druckteller (8) an seiner Unterseite eine Aussparung (13) aufweist.

15. Befestigungssystem nach einem der Ansprüche 11 bis 14, weiterhin aufweisend ein stangenartiges Element (12) auf welchem das Befestigungselement und/oder der Druckteller (8) verstellbar angeordnet sind.

## Claims

1. Fixing element for screwing into a building material, the fixing element having an adjusting body (1) having a longitudinal axis X, wherein at the end of the adjusting body (1) which opposes the building material in screw-in direction, an upper fixing portion (2) is arranged, and wherein at the end of the adjusting body (1) which faces the building material in screw-in direction, a lower fixing portion (3) is arranged, **characterized in that**
the lower fixing portion (3) comprises at least one first threaded portion (4) which opposes the building material in screw-in direction and adjacent thereto a second threaded portion (5) which faces the building material in screw-in direction, wherein the second threaded portion (5) comprises a slope S and wherein the first threaded portion (4) extends substantially in a plane E perpendicular to the longitudinal axis X of the adjusting body (1) and wherein the thread diameter increases in direction from the second threaded portion (5) to the first threaded portion (4) from a first value (D1) to a second value (D2) such that the first threaded portion (4) forms a plate-like rest.

2. Fixing element according to claim 1, **characterized in that** the adjusting body (1) comprises a hole (6) along the longitudinal axis X.

3. Fixing element according to claim 2, **characterized in that** the hole (6) is a threaded hole.

4. Fixing element according to any of the preceding claims, **characterized in that** an adapter piece (7) for engaging with a tool is adjacent to the upper fixing portion (2).

5. Fixing element according to claim 4, **characterized in that** the adapter piece (7) being formed as hexagonal key.

6. Fixing element according to any of the preceding claims, **characterized in that** the upper fixing portion (2) comprises a metric screw thread.

7. Fixing element according to any of the preceding claims, **characterized in that** the upper fixing portion (2) comprises a plug-, snap-in-, snap-on- or clamping device.

8. Fixing element according to any of the preceding claims, **characterized in that** the slope S of the second threaded portion (5) is between 5 and 50 mm.

9. Fixing element according to any of the preceding claims, **characterized in that** the thread diameter increases from a first value (D1) between 5 and 20 mm at the beginning of the second threaded portion (5) to a second value (D2) between 20 and 50 mm at the first threaded portion (4).

10. Fixing element according to any of the preceding claims, **characterized in that** the plate-like rest of the first threaded portion (4) extends over about a ¾ turn from an initial edge (31) to a final edge (15), such that a gap G of about a ¼ turn is formed between these both edges.

11. Fixing system comprising a fixing element according to claim 1 and a pressure plate (8), which can be fitted onto the upper fixing portion (2) of the adjusting body (1), such that a material panel (9) lying between the plate-like rest of the first threaded portion (4) and the pressure plate (8) can be clamped.

12. Fixing system according to claim 11, **characterized in that** the pressure plate (8) comprises an axial hole (10), in particular a threaded hole.

13. Fixing system according to claim 11 or claim 12, **characterized in that** the pressure plate (8) comprises an adapter piece (11), in particular a hexagonal key, for engaging with a tool.

14. Fixing system according to any of the claims 11 to 13, **characterized in that** the pressure plate (8) comprises a recess (13) at its bottom.

15. Fixing system according to any of the claims 11 to 14, further comprising a rod-like element (12) on which the fixing element and/or the pressure plate (8) are variably arranged.

## Revendications

1. Élément de fixation à visser dans un matériau de construction, possédant un corps de réglage (1) avec un axe longitudinal X, une partie de fixation supérieure (2) étant disposée à l'extrémité du corps de réglage (1) éloignée du matériau de construction dans le sens de vissage, et une partie de fixation inférieure (3) étant disposée à l'extrémité du corps de réglage (1) tournée vers le matériau de construction dans le sens de vissage, **caractérisé en ce que** la partie de fixation inférieure (3) présente au moins une première partie filetée (4) éloignée du matériau de construction dans le sens de vissage, et une deuxième partie filetée (5) s'y raccordant, tournée vers le matériau de construction dans le sens de vissage, la deuxième partie filetée (5) présentant un pas S et la première partie filetée (4) s'étendant sensiblement dans un plan E perpendiculaire à l'axe longitudinal X du corps de réglage (1), et le diamètre de filetage augmentant d'une première valeur (D1) à une deuxième valeur (D2) dans le sens de la deuxième partie filetée (5) vers la première partie filetée (4), de sorte que la première partie filetée (4) offre un appui en forme de disque.

2. Élément de fixation selon la revendication 1, **caractérisé en ce que** le corps de réglage (1) est pourvu d'un perçage (6) le long de l'axe longitudinal X.

3. Élément de fixation selon la revendication 2, **caractérisé en ce que** le perçage (6) est un perçage fileté.

4. Élément de fixation selon une des revendications précédentes, **caractérisé en ce qu'**une pièce de raccordement (7) pour l'engagement d'un outil se raccorde à la partie de fixation supérieure (2).

5. Élément de fixation selon la revendication 4, **caractérisé en ce que** la pièce de raccordement (7) est réalisée sous la forme d'un hexagone mâle.

6. Élément de fixation selon une des revendications précédentes, **caractérisé en ce que** la partie de fixation supérieure (2) présente un filetage métrique.

7. Élément de fixation selon une des revendications précédentes, **caractérisé en ce que** la partie de fixation supérieure (2) présente un dispositif d'enfichage, de crantage, d'encliquetage ou de serrage.

8. Élément de fixation selon une des revendications précédentes, **caractérisé en ce que** le pas S de la deuxième partie filetée (5) est compris entre 5 et 50 mm.

9. Élément de fixation selon une des revendications précédentes, **caractérisé en ce que** le diamètre de filetage augmente d'une première valeur (D1) comprise entre 5 et 20 mm au début de la deuxième partie filetée (5) à une deuxième valeur (D2) comprise entre 20 et 50 mm sur la première partie filetée (4).

10. Élément de fixation selon une des revendications précédentes, **caractérisé en ce que** l'appui en forme de disque de la première partie filetée (4) s'étend sur environ % de tour d'une arête initiale (31) jusqu'à une arête terminale (15), de sorte qu'une fente G d'environ ¼ de tour est formée entre ces deux arêtes.

11. Système de fixation composé d'un élément de fixation selon la revendication 1 et d'un disque de pression (8), lequel peut être positionné sur la partie de fixation supérieure (2) du corps de réglage (1) et permet ainsi de serrer une bande de matière (9) située entre l'appui en forme de disque de la première partie filetée (4) et le disque de pression (8).

12. Système de fixation selon la revendication 11, **caractérisé en ce que** le disque de pression (8) est pourvu d'un perçage axial (10), en particulier d'un perçage fileté.

13. Système de fixation selon la revendication 11 ou la revendication 12, **caractérisé en ce que** le disque de pression (8) présente une pièce de raccordement (11), en particulier un hexagone mâle, pour l'engagement d'un outil.

14. Système de fixation selon une des revendications 11 à 13, **caractérisé en ce que** le disque de pression (8) présente un évidement (13) sur sa face inférieure.

15. Système de fixation selon une des revendications 11 à 14, lequel présente en outre un élément (12) en forme de tige sur lequel l'élément de fixation et/ou le disque de pression (8) sont disposés de manière réglable.
